Europäisches Patentamt

European Patent Office

Office européen des brevets

(11) Publication number: **0 338 860 B1**

# EUROPEAN PATENT SPECIFICATION

(45) Date of publication of patent specification: **10.11.93**  (51) Int. Cl.⁵: **C08L 23/16**, C08F 255/04, C08K 5/34

(21) Application number: **89304012.1**

(22) Date of filing: **21.04.89**

(54) **Thermoplastic elastomer composition.**

(30) Priority: **22.04.88 JP 101150/88**
**25.07.88 JP 185786/88**

(43) Date of publication of application:
**25.10.89 Bulletin 89/43**

(45) Publication of the grant of the patent:
**10.11.93 Bulletin 93/45**

(84) Designated Contracting States:
**DE FR GB IT NL**

(56) References cited:
**EP-A- 0 072 203**
**EP-A- 0 101 827**
**EP-A- 0 164 217**
**EP-A- 0 298 739**

(73) Proprietor: **SUMITOMO CHEMICAL COMPANY,**
**LIMITED**
**Kitahama 4-chome 5-33**
**Chuo-ku Osaka 541(JP)**

(72) Inventor: **Mitsuno, Tatsuyuki**
**9-7-204, Kurosuna 3-chome**
**Chiba-shi Chiba 281(JP)**
Inventor: **Shinonaga, Hideo**
**285-172, Higashiterayamacho**
**Chiba-shi Chiba 260(JP)**
Inventor: **Daimon, Akio**
**1-9, Yushudainishi, Ichihara-shi**
**Chiba 299-01(JP)**

(74) Representative: **Cresswell, Thomas Anthony**
**et al**
**J.A. Kemp & Co.**
**14 South Square**
**Gray's Inn**
**London WC1R 5EU (GB)**

EP 0 338 860 B1

**Description**

The present invention relates to a thermoplastic elastomer composition.

Recently, thermoplastic elastomers have steadily been extended to a wide range of applications including parts of automobiles, household appliances and the like because of their low-hardness and flexibility as well as their moldability by conventional methods such as extrusion molding, injection molding, etc.

Olefinic thermoplastic elastomers are especially highlighted as a material for exterior trim parts of automobiles with the trend to render the automobiles lightweight, fashionable and rationalized, because they are excellent in flexibility, heat resistance and low-temperature impact resistance.

A typical example of the exterior trim parts is an automobile bumper. However, since the bumper is a large functional part, its material is required at a high level to have injection moldability and capability of providing molded articles with appearance, heat resistance, mechanical properties such as low-temperature impact resistance and paintability.

The present invention relates to a thermoplastic elastomer composition which is excellent in injection moldability and capable of providing large molded articles having mat appearance, with retaining low-temperature impact resistance. This composition is particularly intended for the application to automobile parts.

Olefinic thermoplastic elastomers normally comprise an olefinic copolymer rubber and an olefinic plastic as major components.

In order to make the most use of the characteristics of heat resistance and low-temperature impact resistance, the olefinic copolymer rubber is partly crosslinked using organic peroxides and the like.

However, the olefinic copolymer rubber per se is high in viscosity under a normal temperature/pressure condition of the injection molding of thermoplastic elastomers. If the olefinic copolymer rubber is partly crosslinked using organic peroxides and the like, flowability of the resultant thermoplastic elastomer is further lowered.

Therefore, when a large and thin product is, for example, injection-molded, variation of flowability of molten thermoplastic elastomers becomes large in the mold. Thus, it often becomes difficult for the mold to be filled with the elastomer uniformly and accurately, or bad phenomena such as flow marks and weld lines may appear on the surface of injection-molded products so that their commercial value is considerably damaged.

Particularly for automobile large exterior trim parts exemplified by bumper parts, needed is a thermoplastic elastomer which not only retains flexibility, heat resistance, low-temperature impact resistance and paintability but also has high flowability upon injection molding and provides molded articles having mat appearance demanded recently.

In order to obtain an olefinic thermoplastic elastomer which exhibits mat appearance, the use of olefinic copolymer rubbers high in Mooney viscosity is essential. In this case, however, flow marks or fish eyes appear on the surface of injection-molded articles and thus appearance is deteriorated.

A thermoplastic elastomer composition may be obtained by a process in which an olefinic copolymer rubber high in Mooney viscosity, an olefinic plastic, a mineral oil softener and a bismaleimide compound are melt-kneaded together, and then the mixture is dynamically heat-treated in the presence of an organic peroxide. However, this process has a disadvantage that the mineral oil softeners are not easy to handle upon kneading, and it takes a long time for the mineral oil softeners to permeate into the rubbers and thereby kneading time becomes long.

It is an object of the present invention to provide a thermoplastic elastomer composition which eliminates the above-mentioned defects in formulation and preparation and is excellent in injection-moldability with retaining low-temperature impact resistance and capable of providing large injection-molded articles having mat appearance.

The present invention relates to a thermoplastic elastomer composition having excellent injection-moldability and exhibiting mat appearance, which is obtained by preparing a mixture comprising a specific olefinic copolymer rubber which has been preliminarily oil-extended, an olefinic plastic or an olefinic plastic which has been thermally decomposed to a specific degree using an organic peroxide, and a bismaleimide compound, wherein the bismaleimide compound is uniformly dispersed, and then dynamically heat-treating the mixture in the presence of an organic peroxide.

More specifically, the present invention relates to a thermoplastic elastomer composition obtainable by dynamically heat-treating a mixture (F) in the presence of an organic peroxide (E), said mixture (F) comprising

100 parts by weight of a mixture (C) consisting essentially of 24 - 80 parts by weight of an oil-extended

2

olefinic copolymer rubber (A) and 20 - 76 parts by weight of an olefinic plastic (B) defined below; said oil-extended olefinic copolymer rubber (A) comprising 100 parts by weight of an olefinic copolymer rubber (a) having a Mooney viscosity ($ML_{1+4}$ 100°C) of 90 - 200 and a propylene content of 10- 60 % by weight and 20 - 60 parts by weight of a mineral oil softener (b), and

0.1 - 3 parts by weight of a bismaleimide compound (D), said olefinic plastic (B) being obtainable by thermally decomposing an isotactic polypropylene or a propylene-$\alpha$-olefin copolymer by an organic peroxide, wherein the isotactic polypropylene or propylene-$\alpha$-olefin copolymer has a melt index ($M_0$) before thermal decomposition of 1 to 10 g/10 min., a melt index ($M_1$) after thermal decomposition of 20 to 50 g/10 min., and the ratio of $M_1/M_0$ is 2 to 50.

The present thermoplastic elastomer composition can be produced by dynamically heat-treating the mixture (F) in the presence of an organic peroxide (E). The process may comprise the steps of oil extending 100 parts by weight of an olefinic copolymer rubber (a) having a Mooney viscosity ($ML_{1+4}$ 100°C) of 90 to 200 and a propylene content of 10 to 60% by weight with 20 to 60 parts by weight of a mineral oil softener (b) to form an oil-extended olefinic copolymer rubber (A), thermally decomposing an isotactic polypropylene or propylene-$\alpha$-olefin copolymer by an organic peroxide to form an olefinic plastic (B) wherein the isotactic polypropylene or propylene-$\alpha$-olefin copolymer has a melt index ($M_0$) before thermal decomposition of 1 to 10 g/10 min., a melt index ($M_1$) after thermal decomposition of 20 to 50 g/10 min. and the ratio of $M_1/M_0$ is 2 to 50,

mixing 24 to 80 parts by weight of oil-extended olefinic copolymer rubber (A) with 20 to 76 parts by weight of olefinic plastic (B) to form a mixture (C),

mixing the mixture (C) with 0.1 to 3 parts by weight of a bismaleimide compound (D) to form a mixture (F) and

dynamically heat-treating the mixure (F) in the presence of an organic peroxide (E).

In accordance with the present invention , it has been found out that by virtue of the use of the oil-extended olefinic copolymer rubber, bad phenomena such as flow marks or gel-like aggregates called fish eye which tended to appear on the surface of injection-molded articles owing to the partial crosslinking of olefinic copolymer rubbers, are eliminated and molded articles having mat appearance are obtained.

In accordance with the present invention, partial crosslinking is uniformly performed and appearance is improved, by uniformly dispersing a specific amount of a bismaleimide compound in a composition of an oil-extended olefinic copolymer rubber and an olefinic plastic or its thermally decomposed product and then dynamically heat-treating the obtained mixture in the presence of an organic peroxide.

Also, in accordance with the present invention,thanks to the use of the oil-extended olefinic copolymer rubber, operability upon kneading is improved in terms of labor and dirt, and a time required for kneading is greatly reduced, compared with the case where an olefinic copolymer rubber and a mineral oil softener are individually used.

Hereinafter, the constituents of the present invention will be more specifically described .

The olefinic copolymer rubbers (a) used in the present invention are suitably amorphous random elastic olefinic copolymers such as ethylene-propylene copolymer rubbers, ethylene-propylene-non-conjugated diene rubbers, ethylene-butene-non-conjugated diene rubbers and propylene-butadiene copolymer rubbers. Among them, especially preferred are ethylene-propylene-non-conjugated diene rubbers. The non-conjugated dienes, include, for example, dicyclopentadiene, 1,4-hexadiene, cyclooctadiene, methylenenorbornene and ethylidenenorbornene. Ethylidenenorbornene is especially preferred.

More specific examples are ethylene-propylene-ethylidenenorbornene copolymer rubbers (hereinafter referred to as "EPDM") having 10 - 60 % by weight, preferably 20 - 40 % by weight of propylene and 1 - 30 % by weight, preferably 3- 20 % by weight of ethylidenenorbornene and also having 90 - 200, preferably 120 - 170 of Mooney viscosity at 100°C ($ML_{1+4}$ 100°C).

When propylene content is less than 10 % by weight, flexibility is reduced and when more than 60 % by weight, mechanical characteristics are deteriorated. When Mooney viscosity ($ML_{1+4}$ 100°C) is lower than 90, only a composition is obtained which does not meet the tensile properties required for desired low-temperature impact resistance and when more than 200, gel-like aggregates called fish eye appear on the surface of injection-molded articles and thus tensile strength and low-temperature impact resistance are deteriorated.

In case of ethylene-propylene copolymer rubbers and ethylene-propylene-non-conjugated diene copolymer rubbers, propylene content is 10 - 60 % by weight. When propylene content is less than 10 % by weight, the copolymer rubber becomes crystalline due to the high content of ethylene and thus low in heat resistance. When it is more than 60 % by weight, decomposition reaction by organic peroxides is excessively performed.

The copolymer rubbers preferably have 16 or less of iodine value (unsaturation degree). In this range, a partially crosslinked composition which is well-balanced between flowability and rubbery characteristics is obtained.

The mineral oil softener (b) used in the present invention is suitably a high boiling petroleum fraction which includes, for example, paraffinic, naphthenic and aromatic ones. The mineral oil softener is used in order to facilitate the process of dynamic heat-treatment of the mixture of the olefinic copolymer rubber and the olefinic plastic, like, to assist the dispersion of carbon black, and besides to increase the flowability or decrease the hardness of the resulting thermoplastic elastomer composition so that its flexibility and elasticity are enhanced.

The oil-extended olefinic copolymer rubber (A) used in the present invention contains 20 - 60 parts by weight of the mineral oil softener (b) based on 100 parts by weight of the above olefinic copolymer rubber (a). If the mineral oil softener is less than 20 parts by weight, flowability upon injection molding is degraded, flow marks occur or strain becomes great in the vicinity of the gate. If more than 60 parts by weight, tensile properties or low-temperature impact properties are deteriorated or gel-like aggregates called fish eye occur on the surface of injection-molded articles and thus appearance is considerably damaged.

In the meantime, among the oil-extended olefinic copolymer rubbers, Mooney viscosity of ethylene-propylene-non-conjugated diene copolymer rubber can be calculated in accordance with ASTM D-927-577 by the following equation:

$$\log \left[ \frac{ML_1}{ML_2} \right] = 0.0066 \, (\Delta PHR)$$

$ML_1$ : Viscosity of EPDM

$ML_2$ : Viscosity of oil-extended EPDM

$\Delta PHR$ : Oil-extension amount per 100 parts by weight of EPDM

The olefinic plastic (B) used in the present invention is obtainable by thermally decomposing an isotactic polypropylene or copolymer of propylene and a small amount of $\alpha$-olefin such as propylene-ethylene copolymer, propylene-1-butene copolymer, propylene-1-hexene copolymer and propylene-4-methyl-1-pentene copolymer, preferably by dynamic heat-treatment, with an organic peroxide to decrease its molecular weight and increase its flowability. This olefinic plastic can be obtained by the thermal decomposition using an organic peroxide exemplified by 1,3-bis(t-butylperoxyisopropyl)benzene. More specifially, by thermally decomposing an olefinic plastic having a melt index ($M_0$) (JIS K 7210, 230°C) of 1 - 10 g/10 min., preferably 2 - 6g/10 min. by use of an organic peroxide, it may be obtained as a heat-treated olefinic plastic having a melt index ($M_1$) of 20 - 50 g/10 min., preferably 30 - 40 g/10 min. In other words, the treated olefinic plastic has a ratio ($M_1/M_0$) of the melt index after thermal decomposition to the melt index before thermal decomposition of 2 - 50. When the ratio, i.e., thermal decomposition degree by organic peroxides ($M_1/M_0$) is less then 2, flowability of the final composition is degraded or bad phenomena such as flow marks appear on the surface of injection-molded articles. When the thermal decomposition degree ($M_1/M_0$) is more than 50, tensile properties required to obtain low-temperature impact properties are degraded. The thermal decomposition degree ($M_1/M_0$) is preferably 3 - 40, more preferably 5 - 20.

The bismaleimide compound (D) used in the present invention includes, for example, N,N'-m-phenylenebismaleimide and toluylenebismaleimide. N,N'-m-phenylenebismaleimide may be commericaly available ones such as HVA-2 manufactured by DuPont Co. and Soxinol[R] BM manufactured by Sumitomo Chemical Co., Ltd.

The organic peroxide (E) used in the present invention includes 2,5,-dimethyl-2,5-di(t-butylperoxy)-hexane, 2,5-dimethyl-2,5-di(t-butylperoxy)hexyne-3, 1,3-bis(t-butylperoxyisopropyl)benzene, 1,1-di(t-butylperoxy)3,5,5-trimethylcyclohexane, 2,5-dimethyl-2,5-di(peroxybenzoyl)hexyne-3 and dicumyl peroxide. They are used alone or in combination thereof if required.

(1) Formulation:

In the present invention, the oil-extended olefinic copolymer rubber (A) constitutes 24 - 80 parts by weight of 100 parts by weight of the mixture (C) of the oil-extended olefinic copolymer rubber (A) and the olefinic plastic (B). When it constitutes less than 24 parts by weight, crosslinking by organic peroxides is insufficient or the thermoplastic elastomer is lack of flexibility and low-hardness. When more than 80 parts by weight, appearance of injection-molded articles which is important for automobile exterior trim parts is damaged or heat resistance is inferior.

(2) Processes for production and molding:

In the production of the thermoplastic elastomer composition of the present invention, oil-extended olefinic copolymer rubber (A), olefinic plastic (B) and bismaleimide compound (D) are first mixed and melt-kneaded together. This can be carried out within the temperature range of 170 - 280°C by use of a known kneading machine such as a mixing roll, a Banbury mixer, an extruder, a kneader and a continuous mixer. Preferably, a Banbury mixer is used.

In the production, it is important to uniformly disperse bismaleimide compound (D) in the above mixture. In order to do so, it is desirable to conduct the mixing and kneading under the atmosphere of an inert gas such as nitrogen or carbon dioxide gas.

Then, the above mixture is dynamically heat-treated in the presence of organic peroxide (E). This can also be carried out by use of the above-mentioned known kneading machine.

To the thermoplastic elastomer composition of the present invention, may be added fillers such as carbon black, various additives such as lubricants, pigments, stabilizing agents and ultraviolet absorbers or modifying components, if necessary.

(3) Properties and uses:

The thermoplastic elastomer composition of the present invention has excellent injection moldability and provides injection-molded articles having mat appearance. Namely, the articles are characterized in that no gel-like aggregate called fish eye appears and flow mark, sink and weld line are less perceptible on their surface.

Because of the advantages as mentioned above, the thermoplastic elastomer composition of the present invention can be applied to the following uses:

(1) Bumper parts such as bumper, bumper corner and bumper airdam skirt.

(2) Automobile exterior parts of decorative nature such as side mole, steering wheel and splash board.

(3) Electric parts such as connector and cap plug.

Hereinafter, the present invention will be explained in more detail by way of the following examples including comparative ones.

In the examples, appearance and properties of compositions were tested by the following methods.

Test methods used in the examples

(1) Preparation of test specimens:

An obtained elastomer composition was molded at 200°C into a flat sheet of 100 mm width, 400 mm length and 3 mm thickness by use of an injection molding machine, NEOMATT manufactured by Sumitomo Heavy Industries Ltd. Then, the flat sheet was subjected to the following tests.

(2) Flowability (melt index):

Melt index was measured at 230°C under a load of 2.16 kg in accordance with JIS K 7210.

(3) Appearance (Imperceptibility of flow marks and occurrence of fish eyes):

Imperceptibility of flow marks and occurrence of fish eyes on the surface of the flat sheet of 100 mm width, 400 mm length and 3 mm thickness were visually observed and graded by five point evaluation standard as follows:

Standard for evaluation of flow mark:

5 :    No flow mark on the whole surface of injection molded articles.
4 :    2 or 3 flow marks in the vicinity of the gate.
3 :    flow marks from the gate to the center portion.

2 :    flow marks from the gate to 3/4 the length of injection molded articles.

1 :    flow marks on the whole surface of injection molded articles.

Standard for evaluation of fish eye:

5 :    No fish eye.

4 :    Fish eyes of 1 mm or less.

3 :    Fish eyes of 1 - 3 mm.

2 :    Fish eyes of 3 - 5 mm.

1 :    Large fish eyes of 5 mm or more.

(4) Flexural modulus:

This was measured at a span of 50 mm and a bending rate of 1 mm/min. in accordance with JIS K 7203.

(5) Gloss:

This was measured at an angle of incidence of 60° in accordance with JIS Z 8741.

(6) Tensile strength, tensile elongation:

These were measured at a pulling rate of 50 mm/min. on JIS No. 2 dumbbell specimens in accordance with JIS K 6301.

(7) Heat resistance (heat sag)

A test specimen of 20 mm width, 100 mm length and 3 mm thickness supported like a cantilever was stood at 120 °C for one hour, and then the vertical distance of its sagging was measured.

Example 1

48 parts by weight of oil-extended rubber (hereinafter referred to as "oil-extended EPDM-1") which had been obtained by adding 40 parts by weight of paraffinic process oil to 100 parts by weight of ethylene-propylene-ethylidenenorbornene copolymer rubber having a Mooney viscosity ($ML_{1+4}$ 100°C) of 143, a propylene content of 25 % by weight and an ethylidenenorbornene content of 5 % by weight, 52 parts by weight of polypropylene (hereinafter referred to as "PP-1") having a melt index (JIS K 7210, 230°C, 2.16 kg) before thermal decomposition of 4 and a melt index after thermal decomposition of 30 ($M_1/M_0 = 7.5$) and 0.4 parts by weight of N,N'-m-phenylenebismaleimide (hereinafter referred to as "BM"), were melt-kneaded in a Banbury mixer under nitrogen atmosphere at 180°C for 8 minutes. And, the mixture was subjected to a roll and then pelletized by a sheet cutter.

The obtained pellets (hereinafter referred to as "CP-1") were mixed with 0.07 parts by weight of 1,3-bis-(t-butylperoxyisopropyl)benzene (hereinafter referred to as "PO-1") in a tumbler blender, and the mixture was extruded under nitrogen atmosphere at 240°C by an 65 mm extruder to obtain final pellets.

The test results are shown in Table 1.

Example 2

Example 1 was repeated except that polypropylene (Sumitomo Noblen® Z101A) having a melt index of 30 which was not thermally decomposed was used in place of PP-1.

Example 3

Example 1 was repeated except that ethylene propylene copolymer (hereinafter referred to as "PP-2") which had a melt index before thermal decomposition of 4 (Sumitomo Noblen® AH591) and a melt index after thermal decomposition of 30 ($M_1/M_0 = 10$), was used in place of PP-1.

6

Example 4

Example 1 was repeated except that 1.5 parts by weight of BM was used.

Comparative Examples 1-2

Example 1 was repeated except that ethylene-propylene-ethylidenenorbornene copolymer rubbers (hereinafter referred to as "oil-extended EPDM-2" or "oil-extended EPDM-3") which respectively had a Mooney viscosity ($ML_{1+4}$ 100°C) of 30 (comparative example 1) and 240 (comparative example 2), a propylene content of 25 % by weight and an ethylidenenorbornene content of 5 % by weight, were used in place of oil-extended EPDM-1.

Comparative Examples 3-4

Example 1 was repeated except that 20 parts by weight of oil-extended EPDM-1 and 80 parts by weight of PP-1 (comparative example 3) or 85 parts by weight of oil-extended EPDM-1 and 15 parts by weight of PP-1 (comparative example 4), were used in place of 48 parts by weight of oil-extended EPDM-1 and 52 parts by weight of PP-1.

Comparative Examples 5-6

Example 1 was repeated except that in place of PP-1, PP-3 having a melt index before thermal decomposition of 4 and a melt index after thermal decomposition of 7 ($M_1/M_0 = 1.75$) and PP-4 having the former melt index of 2 and the latter melt index of 120 ($M_1/M_0 = 60$) were respectively used in comparative example 5 and 6.

Comparative Examples 7-8

Example 1 was repeated except that in place of 40 parts by weight of paraffinic process oil, 10 and 80 parts by weight of paraffinic process oils were respectively used in comparative examples 7 and 8.

Comparative Examples 9-10

Example 1 was repeated except that in place of 0.4 parts by weight of BM, 0.05 and 4 parts by weight of BMs were respectively used in comparative examples 9 and 10.

Comparative Example 11

Example 1 was repeated except that pellets CP-2 were used in place of pellets CP-1, and 0.07 parts by weight of PO-1 and 0.4 parts by weight of BM were mixed with CP-2. The pellets CP-2 consisted of the same components as the pellets CP-1 except that it contained no BM.

Comparative Example 12

Example 1 was repeated except that 34.3 parts by weight of ethylene-propylene-ethylidenenorbornene copolymer rubber having a Mooney viscosity ($ML_{1+4}$ 100°C) of 143, a propylene content of 25 % by weight and an ethylidenenorbornene content of 5 % by weight and 13.7 parts by weight of paraffinic process oil were used without preliminarily impregnating the latter into the former, in place of oil-extended EPDM-1.

Comparative Example 13

Comparative example 12 was repeated except that 34.3 parts by weight of the ethylene-propylene-ethylidenenorbornene, 52 parts by weight of PP-1 and 0.4 parts by weight of BM were melt-kneaded for 5 minutes in a Banbury mixer, and the mixture was further melt-kneaded for 10 minutes together with 13.7 parts by weight of the paraffinic process oil and then was subjected to a roll and pelletized by a sheet cutter.

The test results are shown in Table 1.

7

In accordance with the present invention, a thermoplastic elastomer composition which has excellent injection moldability and mat appearance is obtained by uniformly dispersing a bismaleimide compound in a mixture of a preliminarily oil-extended specific olefinic copolymer rubber and an olefinic plastic or an olefinic plastic which has been thermally decomposed to some extent by an organic peroxide, and then dynamically heat-treating the mixture in the presence of an organic peroxide. In the production of the thermoplastic elastomer composition, kneading is easy to carry out and a time required for the kneading is greatly reduced.

Table 1

| | No. | Melt Index (g/10min) | Appearance — Perceptibility of flow mark | Appearance — Occurrence of fish eye | Flexural modulus (kg/cm2) | Gloss (%) | Tensile properties — Tensile strength (kg/cm2) | Tensile properties — Elongation (%) | Heat sag (mm) |
|---|---|---|---|---|---|---|---|---|---|
| Example | 1 | 28 | 5 | 5 | 4500 | 18 | 230 | 670 | 4 |
| | 2 | 22 | 3 | 5 | 4700 | 22 | 127 | 480 | 4 |
| | 3 | 30 | 4 | 4 | 4000 | 26 | 155 | 610 | 6 |
| | 4 | 22 | 4 | 4 | 4600 | 20 | 237 | 680 | 4 |
| | 1 | 14 | 2 | 5 | 4500 | 24 | 128 | 530 | 3 |
| | 2 | 38 | 5 | 2 | 4500 | 31 | 105 | 180 | 4 |
| | 3 | 55 | 5 | 2 | 8100 | 44 | 95 | 110 | 2 |
| | 4 | 8 | 2 | 5 | 1730 | 37 | 67 | 480 | 34 |
| | 5 | 13 | 2 | 5 | 4500 | 24 | 163 | 540 | 4 |
| | 6 | 61 | 4 | 3 | 4800 | 38 | 55 | 70 | 3 |
| | 7 | 10 | 2 | 4 | 5700 | 20 | 225 | 640 | 3 |
| | 8 | 28 | 5 | 2 | 3500 | 24 | 143 | 490 | 8 |
| | 9 | 25 | 4 | 5 | 4400 | 38 | 178 | 580 | 4 |
| Comparative Example | 10 | 10 | 1-2 | 1 | 4500 | 33 | 214 | 570 | 4 |
| | 11 | 11 | 1-2 | 4 | 4300 | 41 | 170 | 620 | 5 |
| | 12 | 12 | 2 | 5 | 4500 | 20 | 146 | 440 | 4 |
| | 13 | 18 | 4 | 5 | 4500 | 18 | 181 | 610 | 4 |

## Claims

1. A thermoplastic elastomer composition which comprises a product obtainable by dynamically heat-treating a mixture (F) in the presence of an organic peroxide (E), said mixture (F) comprising 0.1 to 3 parts by weight of a bismaleimide compound (D), and 100 parts by weight of a mixture (C) consisting essentially of 24 to 80 parts by weight of an oil-extended olefinic copolymer rubber (A) and 20 to 76 parts by weight of an olefinic plastic (B); said oil-extended olefinic copolymer rubber (A) comprising 100 parts by weight of an olefinic copolymer rubber (a) having a Mooney viscosity ($ML_{1+4}$ 100°C) of 90 to 200 and a propylene content of 10 to 60 % by weight and 20 to 60 parts by weight of a mineral oil softener (b) and said olefinic plastic (B) being obtainable by thermally decomposing an isotactic polypropylene or a propylene-$\alpha$-olefin copolymer by an organic peroxide, wherein the isotactic poly-propylene or propylene-$\alpha$-olefin copolymer has a melt index ($M_0$) before thermal decomposition of 1 to 10 g/10 min., a melt index ($M_1$) after thermal decomposition of 20 to 50 g/10 min., and the ratio of $M_1/M_0$ is 2 to 50.

2. A composition according to claim 1, wherein the olefinic copolymer rubber (a) is ethylene-propylene-non-conjugated diene copolymer rubber.

3. A composition according to claim 1 or claim 2, wherein the bismaleimide compound (D) is N,N'-m-phenylenebismaleimide.

4. A process for producing a thermoplastic elastomer composition which process comprises dynamically heat treating a mixture (F) in the presence of an organic peroxide (E), said mixture (F) comprising 0.1 to 3 parts by weight of a bismaleimide compound (D), and 100 parts by weight of a mixture (C) consisting essentially of 24 to 80 parts by weight of an oil-extended olefinic opolymer rubber (A) and 20 to 76 parts by weight of an olefinic plastic (B); said oil-extended olefinic copolymer rubber (A) comprising 100 parts by weight of an olefinic copolymer rubber (a) having a Mooney viscosity ($ML_{1+4}$ 100°C) of 90 to 200 and a propylene content of 10 to 60 % by weight and 20 to 60 parts by weight of a mineral oil softener (b) and said olefinic plastic (B) being obtainable by thermally decomposing an isotactic polypropylene or a propylene-$\alpha$-olefin copolymer by an organic peroxide, wherein the isotactic polypropylene or propylene-$\alpha$-olefin copolymer has a melt index ($M_0$) before thermal decomposition of 1 to 10 g/10 min., a melt index ($M_1$) after thermal decomposition of 20 to 50 g/10 min., and the ratio of $M_1/M_0$ is 2 to 50.

5. A process for producing a thermoplastic elastomer composition which process comprises
(i) oil extending 100 parts by weight of an olefinic copolymer rubber (a) having a Mooney viscosity ($ML_{1+4}$ 100°C) of 90 to 200 and a propylene content of 10 to 60% by weight with 20 to 60 parts by weight of a mineral oil softener (b) to form an oil-extended olefinic copolymer rubber (A),
(ii) thermally decomposing an isotactic polypropylene or propylene-$\alpha$-olefin copolymer by an organic peroxide to form an olefinic plastic (B) wherein the isotactic polypropylene or propylene-$\alpha$-olefin copolymer has a melt index ($M_0$) before thermal decomposition of 1 to 10 g/10 min., a melt index ($M_1$) after thermal decomposition of 20 to 50 g/10 min. and the ratio of $M_1/M_0$ is 2 to 50,
(iii) mixing 24 to 80 parts by weight of oil-extended olefinic copolymer rubber (A) with 20 to 76 parts by weight of olefinic plastic (B) to form a mixture (C)
(iv) mixing the mixture (C) with 0.1 to 3 parts by weight of a bismaleimide compound (D) to form a mixture (F) and
(v) dynamically heat-treating the mixure (F) in the presence of an organic peroxide (E).

6. A process according to claim 4 or claim 5 wherein the olefinic copolymer rubber (a) is ethylene-propylene-non-conjugated diene copolymer rubber.

7. A process according to any one of claims 4 to 6 wherein the bismaleimide compound (D) is N,N'-m-phenylenebismaleimide.

**Patentansprüche**

1. Thermoplastische Elastomerzusammensetzung, welche umfaßt ein Produkt, erhältlich durch dynamische Wärmebehandlung einer Mischung (F) in Gegenwart eines organichen Peroxids (E), wobei die Mischung (F) umfaßt 0,1 bis 3 Gewichtsteile einer Bismaleimid-Verbindung (D) und 100 Gewichtsteile einer Mischung (C), die im wesentlichen besteht aus 24 bis 80 Gewichtsteilen eines ölverlängerten olefinischen Copolymerkautschuks (A) und 20 bis 76 Gewichtsteilen eines olefinischen Kunststoffs (B); wobei der ölverlängerte olefinische Copolymerkautschuk (A) 100 Gewichtsteile eines olefinischen

EP 0 338 860 B1

Coplymerkautschuks (a) mit einer Mooney-Viskosität ($ML_{1+4}$ 100°C) von 90 bis 200 und einem Propylengehalt von 10 bis 60 Gewichtsprozent und 20 bis 60 Gewichtsteile eines Mineralöl-Weichmachers (b) umfaßt und der olefinische Kunststoff (B) erhältlich ist durch thermische Zersetzung eines isotaktischen Polypropylens oder eines Propylen-α-Olefin-Copolymers mit einem organischen Peroxid, worin das isotaktische Polypropylen oder Propylen-α-Olefin-Copolymer einen Schmelzindex ($M_0$) vor der thermischen Zersetzung von 1 bis 10 g/10 min, einen Schmelzindex ($M_1$) nach der thermischen Zersetzung von 20 bis 50 g/10 min hat und das Verhältnis $M_1/M_0$ 2 bis 50 beträgt.

2.  Zusammensetzung nach Anspruch 1, worin der olefinische Copolymerkautschuk (a) ein Ethylen-Propylen-nichtkonjugiertes Dien-Copolymerkautschuk ist.

3.  Zusammensetzung nach Anspruch 1 oder Anspruch 2, worin die Bismaleimid-Verbindung (D) N,N'-m-Phenylenbismaleimid ist.

4.  Verfahren zur Herstellung einer thermoplastischen Elastomerzusammensetzung, welches Verfahren umfaßt die dynamische Wärmebehandlung einer Mischung (F) in Gegenwart eines organichen Peroxids (E), wobei die Mischung (F) umfaßt 0,1 bis 3 Gewichtsteile einer Bismaleimid-Verbindung (D) und 100 Gewichtsteile einer Mischung (C), die im wesentlichen besteht aus 24 bis 80 Gewichtsteilen eines ölverlängerten olefinischen Copolymerkautschuks (A) und 20 bis 76 Gewichtsteilen eines olefinischen Kunststoffs (B); wobei der ölverlängerte olefinische Copolymerkautschuk (A) 100 Gewichtsteile eines olefinischen Coplymerkautschuks (a) mit einer Mooney-Viskosität ($ML_{1+4}$ 100°C) von 90 bis 200 und einem Propylengehalt von 10 bis 60 Gewichtsprozent und 20 bis 60 Gewichtsteile eines Mineralöl-Weichmachers (b) umfaßt und der olefinische Kunststoff (B) erhältlich ist durch thermische Zersetzung eines isotaktischen Polypropylens oder eines Propylen-α-Olefin-Copolymers mit einem organischen Peroxid, worin das isotaktische Polypropylen oder Propylen-α-Olefin-Copolymer einen Schmelzindex ($M_0$) vor der thermischen Zersetzung von 1 bis 10 g/10 min, einen Schmelzindex ($M_1$) nach der thermischen Zersetzung von 20 bis 50 g/10 min hat und das Verhältnis $M_1/M_0$ 2 bis 50 beträgt.

5.  Verfahren zur Herstellung einer thermoplastischen Elastomerzusammensetzung, welches Verfahren umfaßt

    (i) die Ölverlängerung von 100 Gewichtsteilen eines olefinischen Copolymerkautschuks (a) mit einer Mooney-Viskosität ($ML_{1+4}$ 100°C) von 90 bis 200 und einem Propylengehalt von 10 bis 60 Gewichtsprozent mit 20 bis 60 Gewichtsteilen eines Mineralöl-Weichmachers (b) unter Bildung eines ölverlängerten olefinischen Copolymerkautschuks (A),

    (ii) die thermische Zersetzung eines isotaktischen Polypropylens oder Propylen-α-Olefin-Copolymers mit einem organischen Peroxid unter Bildung eines olefinischen Kunststoffs (B), worin das isotaktische Polypropylen oder Propylen-α-Olefin-Copolymer einen Schmelzindex ($M_0$) vor der thermischen Zersetzung von 1 bis 10 g/10 min, einen Schmelzindex ($M_1$) nach der thermischen Zersetzung von 20 bis 50 g/10 min hat und das Verhältnis $M_1/M_0$ 2 bis 50 beträgt,

    (iii)das Mischen von 24 bis 80 Gewichtsteilen ölverlängertem Copolymerkautschuk (A) mit 20 bis 76 Gewichtsteilen olefinischem Kunststoff (B) unter Bildung einer Mischung (C),

    (iv) das Mischen der Mischung (C) mit 0,1 bis 3 Gewichtsteilen einer Bismaleimid-Verbindung (D) unter Bildung einer Mischung (F) und

    (v) die dynamische Wärmebehandlung der Mischung (F) in Gegenwart eines organischen Peroxids (E).

6.  Verfahren nach Anspruch 4 oder Anspruch 5, worin der olefinische Copolymerkautschuk (a) ein Ethylen-Propylen-nicht-konjugiertes Dien-Copolymerkautschuk ist.

7.  Verfahren nach irgendeinem der Ansprüche 4 bis 6, worin die Bismaleimid-Verbindung (D) N,N'-m-Phenylenbismaleimid ist.

**Revendications**

1.  Composition élastomère thermoplastique qui comprend un produit susceptible d'être obtenu en traitant thermiquement d'une manière dynamique un mélange (F) en la présence d'un peroxyde organique (E), le mélange (F) comprenant de 0,1 à 3 parties en poids d'un bismalé'imide (D), et 100 parties en poids d'un mélange (C) composé essentiellement de 24 à 80 parties en poids d'un caoutchouc (A) en

11

copolymère oléfinique étendu à l'huile et de 20 à 76 parties en poids d'une matière plastique (B) oléfinique; ce caoutchouc (A) en copolymère oléfinique étendu à l'huile comprenant 100 parties en poids d'un caoutchouc (a) en copolymère oléfinique ayant une consistance Mooney ($ML_{1+4}$ 100°C) de 90 à 200 et une teneur en propylène de 10 à 60 % en poids et de 20 à 60 parties en poids d'un plastifiant (b) à base d'huile minérale et la matière plastique (B) oléfinique peut être obtenue par décomposition thermique d'un polypropylène isotactique ou d'un copolymère de propylène et de α-oléfine par un peroxyde organique, le polypropylène isotactique ou le copolymère de propylène et de α-oléfine ayant un indice de fluidité ($M_0$) avant décomposition thermique de 1 à 10 g/10 mn, un indice de fluidité ($M_1$) après décomposition thermique de 20 à 50 g/10 mn, le rapport de $M_1/M_0$ étant compris entre 2 et 50.

2. Composition suivant la revendication 1, dans laquelle le caoutchouc (A) en copolymère oléfinique est un caoutchouc en copolymère d'éthylène, de propylène et de diène non conjugué.

3. Composition suivant la revendication 1 ou 2, dans laquelle le bismaléïmide (D) est le N,N'-m-phénylènebismaléïmide.

4. Procédé de préparation d'une composition élastomère thermoplastique, qui consiste à traiter thermiquement d'une manière dynamique un mélange (F) en la présence d'un peroxyde organique (E), le mélange (F) comprenant de 0,1 à 3 parties en poids d'un bismaléïmide (D), et 100 parties en poids d'un mélange (C) composé essentiellement de 24 à 80 parties en poids d'un caoutchouc (A) en copolymère oléfinique étendu à l'huile et de 20 à 76 parties en poids d'une matière plastique (B) oléfinique; ce caoutchouc (A) en copolymère oléfinique étendu à l'huile comprenant 100 parties en poids d'un caoutchouc (a) en copolymère oléfinique ayant une consistance Mooney ($ML_{1+4}$ 100°C) de 90 à 200 et une teneur en propylène de 10 à 60 % en poids et de 20 à 60 parties en poids d'un plastifiant (b) à base d'huile minérale et la matière plastique (B) oléfinique peut être obtenue par décomposition thermique d'un polypropylène isotactique ou d'un copolymère de propylène et de α-oléfine par un peroxyde organique, le polypropylène isotactique ou le copolymère de propylène et de α-oléfine ayant un indice de fluidité ($M_0$) avant décomposition thermique de 1 à 10 g/10 mn, un indice de fluidité ($M_1$) après décomposition thermique de 20 à 50 g/10 mn, le rapport de $M_1/M_0$ étant compris entre 2 et 50.

5. Procédé de préparation d'une composition élastomère thermoplastique, qui consiste

(i) à étendre à l'huile 100 parties en poids d'un caoutchouc (a) en copolymère oléfinique ayant une consistance Mooney ($ML_{1+4}$ 100°C) de 90 à 200 et une teneur en propylène de 10 à 60 % en poids par 20 à 60 parties en poids d'un plastifiant (b) à base d'huile minérale pour former un caoutchouc (A) en copolymère oléfinique étendu à l'huile,

(ii) à décomposer thermiquement un polypropylène isotactique ou un copolymère de propylène et de α-oléfine par un peroxyde organique pour former une matière plastique (B) oléfinique, le polypropylène isotactique ou le copolymère de propylène et de α-oléfine ayant un indice de fluidité ($M_0$) après décomposition thermique de 1 à 10 g/10 mn, et un indice de fluidité ($M_1$) après décomposition thermique de 20 à 50 g/10 mn, le rapport $M_1/M_0$ étant compris entre 2 et 50,

(iii) à mélanger de 24 à 80 parties en poids d'un caoutchouc (A) en copolymère oléfinique étendu à l'huile à 20 à 76 parties en poids d'une matière plastique (B) oléfinique pour former un mélange (C),

(iv) à mélanger le mélange (C) à 0,1 à 3 parties en poids d'un bismaléïmide (D) pour former un mélange (F), et

(v) à traiter thermiquement d'une manière dynamique le mélange (F) en la présence d'un peroxyde (E) organique.

6. Procédé suivant la revendication 4 ou 5, dans lequel le caoutchouc (a) en copolymère oléfinique est un caoutchouc en copolymère d'éthylène, de propylène et de diène non conjugué.

7. Procédé suivant l'une quelconque des revendications 4 à 6, dans lequel le bismaléïmide est le N-N'-m-phénylènebismaléïmide.